(19) Europäisches Patentamt
European Patent Office
Office européen des brevets

(11) **EP 2 821 743 A1**

(12) **EUROPÄISCHE PATENTANMELDUNG**

(43) Veröffentlichungstag:
07.01.2015 Patentblatt 2015/02

(21) Anmeldenummer: 13175076.2

(22) Anmeldetag: 04.07.2013

(51) Int Cl.:
*F27B 3/08* (2006.01)        *F27B 3/20* (2006.01)
*F27B 3/28* (2006.01)        *F27D 27/00* (2010.01)
*H05B 7/18* (2006.01)        *H05B 7/20* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens VAI Metals Technologies GmbH**
**4031 Linz (AT)**

(72) Erfinder:
• **Dorndorf, Markus**
  **76534 Baden-Baden (DE)**

• **Krüger, Klaus**
  **22179 Hamburg (DE)**
• **Hein, Michel**
  **67170 Brumath (FR)**
• **Nardacchione, Domenico**
  **77652 Offenburg (DE)**

(74) Vertreter: **Maier, Daniel Oliver**
**Siemens AG**
**Postfach 22 16 34**
**80506 München (DE)**

(54) **Verfahren zum Betreiben eines Lichtbogenofens und Lichtbogenofen**

(57) Die Erfindung betrifft einen Lichtbogenofen (2) und ein Verfahren zum Betreiben eines Lichtbogenofens (2) mit mindestens einer Elektrode (4a, 4b, 4c) zur Erzeugung eines Lichtbogens (6a, 6b, 6c), bei dem eine Oszillation des Effektivwertes des der Elektrode (4a, 4b, 4c) zugeführten Stromes (I) um einen vorgegebenen Basiswert ($I_0$) erfolgt.

FIG 1

EP 2 821 743 A1

**Beschreibung**

Die Erfindung betrifft ein Verfahren zum Betreiben eines Lichtbogenofens und einen Lichtbogenofen.

Ein Elektro-Lichtbogenofen ist ein Aggregat zum Schmelzen und Recycling von Stahlschrott. Entsprechend der vielfältigen Anwendungsgebiete von Stahl kommt in einem derartigen Lichtbogenofen ein breites Spektrum an Schrott zum Einsatz. Der Schrott kann dabei dem Lichtbogenofen in Form von Spänen und dünnen Drähten bis hin zu schweren Trägern oder gar Bären mit mehreren Tonnen Gewicht zugeführt werden.

Beim herkömmlichen Lichtbogenofen wird der Schrott zu Beginn des Schmelzprozesses als loses Haufwerk in den Lichtbogenofen chargiert. Dieses Haufwerk kann von einem oder mehreren Lichtbögen sehr effizient eingeschmolzen werden, da das Haufwerk die Lichtbögen umgibt und so die Strahlungsenergie aufnimmt. Nach dem Niederschmelzen von Teilen des Schrotts liegt ein flüssiges Bad geschmolzenen Stahls vor, in welchem sich typischerweise noch zahlreiche größere noch zu schmelzende Schrottstücke befinden können. Diese werden von dem/den Lichtbogen/Lichtbögen nicht mehr direkt erreicht. So können sie im Wesentlichen nur noch über Konvektion vom angrenzenden flüssigen Bad aufgeschmolzen werden. Da die Temperatur des Schmelzbades nur wenig oberhalb der Liquidustemperatur liegt und die Badbewegung gering ist benötigt dieses Aufschmelzen relativ viel Zeit.

Insbesondere bei sehr großen Schrottstücken erhöht sich die erforderliche Prozesszeit, so dass die Effizienz des Schmelzprozesses sinkt. Es besteht das Risiko, dass einzelne Schrottstücke bis zum Abstich noch nicht vollständig aufgeschmolzen sind, im schlimmsten Fall verstopfen sie die Abstichöffnung.

Neben den herkömmlichen Lichtbogenöfen mit korbweiser Chargierung tritt das beschriebene Phänomen auch bei Lichtbogenöfen auf, bei denen die Chargierung über einen Schacht oder kontinuierlich erfolgt. Gegebenenfalls ist der Effekt sogar verstärkt, da das gesamte Einsatzgut in einen begrenzten Sektor des Ofengefäßes eingebracht wird. Dieser Sektor stellt eine prädestinierte kalte Stelle dar.

Es ist daher Aufgabe der vorliegenden Erfindung ein Verfahren zum Betreiben eines Lichtbogenofens sowie einen Lichtbogenofen anzugeben, bei dem diese Nachteile vermieden werden und der Einschmelzprozess von zu schmelzendem Stahl verbessert wird.

Erfindungsgemäß wird die erstgenannte Aufgabe gelöst durch ein Verfahren zum Betreiben eines Lichtbogenofens mit den Merkmalen des Patentanspruches 1. Demnach erfolgt beim Betrieb eines Lichtbogenofens mit mindestens einer Elektrode zur Erzeugung eines Lichtbogens eine Oszillation des Effektwertes bzw. des Sollwertes des der Elektrode zugeführten Stromes um einen vorgegebenen Basiswert.

Mittels eines derart betriebenen Lichtbogenofens wird über eine geeignete Badbewegung der konvektive Wärmeübergang deutlich verbessert, so dass ein homogenes und schnelles Aufschmelzen des Schrottes erreicht wird.

Die Erfindung beruht dabei auf den folgenden Erkenntnissen:

Der durch die Elektrode des Lichtbogenofens erzeugte Lichtbogen stellt einen Plasmajet da, der einen Impuls aufweist. Dieser Impuls wirkt auf das flüssige Stahlbad, wodurch eine Badeindrückung und damit eine Badbewegung bewirkt werden. Die Kraftwirkung F steigt dabei überproportional mit dem Effektivwert des Lichtbogenstroms, also mit dem der Elektrode zugeführten Strom I an. Dabei ist die Kraft F proportional $I^2$.

Durch eine Oszillation des Effektivwertes des der Elektrode zugeführten Stromes I um einen vorgegebenen Basiswert wird nun die Badoberfläche in Schwingungen versetzt. Durch diese Schwingungen kann eine geeignete Badbewegung erzeugt werden, wodurch die konvektive Wärmeübertragung verbessert wird. Eine geeignete Badbewegung kann vorzugsweise erzeugt werden, indem die Oszillation periodisch, insbesondere mit einer Periodenfrequenz zwischen 0,2Hz und 2Hz, erfolgt.

Eine weitere Verbesserung der konvektiven Wärmeübertragung erfolgt bei einem Drehstromlichtbogenofen, welcher drei insbesondere im Dreieck angeordnete Elektroden beziehungsweise Lichtbögen umfasst zusätzlich zur Wahl einer geeigneten Periodenfrequenz auch durch eine geeignete Phasenlage der jeweiligen den Elektroden zugeführten Strömen.

Bei Betrieb eines herkömmlichen Drehstromlichtbogenofens brennen bei einem flüssigen Bad die Lichtbögen sehr stabil auf der Badoberfläche. Es treten bei dieser Betriebsweise kaum Schwankungen der Effektivwerte der den Elektroden zugeführten Ströme auf. Bedingt durch die 100Hz (doppelte Netzfrequenz) Rotation der Lichtbögen kann eine leichte Badbewegung angeregt werden. Dieser durch die Phasenverschiebung der einzelnen Ströme hervorgerufene Effekt kann nun durch den erfindungsgemäßen Betrieb eines Lichtbogenofens zusätzlich zur Erzeugung einer Badbewegung genutzt werden.

Durch die erfindungsgemäße Oszillation der Effektivwerte bzw. Sollwerte der den Elektroden zugeführten Ströme um einen vorgegebenen Basiswert und durch eine zusätzliche Phasenverschiebung der einzelnen Ströme der jeweiligen Elektroden kann eine gegenüber dem herkömmlichen Betrieb eines Lichtbogenofens verstärkte Rotation und somit Bewegung des Bades erzielt werden. Die einzelnen Ströme der jeweiligen Elektroden weisen dann beispielsweise die folgende Form auf:

$$I = I_0 + \Delta I * \sin(2\pi f t + \varphi)$$

Dabei ist I der Effektivwert der einer Elektrode zugeführte Strom, welcher sich aus einem Basiswert $I_0$

und einem oszillierenden Anteil ΔI*sin(2πft+φ) zusammensetzt. φ ist der Phasenwinkel, wobei bei einem Drehstromlichtbogenofen die jeweiligen Ströme eine Phasenverschiebung von 120° aufweisen.

Die Oszillation des Stromes und damit die Bewegungen des Stahlbades um den Basiswert kann somit durch Veränderung der Amplitude ΔI und/oder der Periodenfrequenz f des Stromes erfolgen. Mit anderen Worten können die Amplitude ΔI und Periodenfrequenz f auch während eines Schmelzprozesses geändert werden, um eine gewünschte Badbewegung zu erzeugen. Insbesondere kann bei einem Beginn des Schmelzprozess und einer beginnenden Badbewegung die Periodenfrequenz während eines Zeitabschnitts gesteigert werden. Um also eine Badbewegung beginnen zu lassen wird mit einer niedrigen Periodenfrequenz f begonnen, die dann mit zunehmender Badbewegung gesteigert wird, was wiederum zu einer erneut zunehmenden Badbewegung führt. Die Periodenfrequenz f wird dabei anhand der Trägheit bzw. Masse des Stahlbades gewählt. Die Erhöhung der Periodenfrequenz f in dem betrachteten Zeitabschnitt erfolgt bevorzugt derart, dass eine Badbewegung maximiert wird. Nach dem betrachteten Zeitabschnitt kann dann die Periodenfrequenz f wieder konstant gehalten werden.

Wird für die Oszillation eine geeignete Periodenfrequenz f von 0,2Hz bis 2Hz gewählt, so bildet sich im Ofengefäß eine umlaufende Welle aus. Entsprechende Frequenzen werden, abhängig vom Gefäß und Teilkreisdurchmesser, im Bereich von unter 1Hz liegen. Die resultierende, definiert einstellbare Badbewegung führt zum gewünschten guten konvektiven Wärmeübergang. Die Ausbildung der Welle kann insbesondere durch einen Anstieg der Periodenfrequenz f der den einzelnen Elektroden zugeführten Ströme beim anfänglichen Erzeugen der Badbewegung begünstigt werden. Die jeweiligen Periodenfrequenzen f der Ströme und damit die Umlauffrequenz der umlaufenden Welle im Stahlbad wird somit derart erhöht, dass die Rotationsgeschwindigkeitszunahme des Stahlbades, also dessen Beschleunigung maximal wird.

Insgesamt ergibt sich durch die gezielte Oszillation der Effektivwerte des Stromes und einer geeigneten Umlauffrequenz eine erzwungene Rotation des Stahlbades und eine damit einhergehende bessere Durchmischung beziehungsweise Temperaturvergleichmäßigung des Stahlbades. Speziell bei exzentrisch zugeführter elektrischer Energie und/oder Schmelzgutzugabe und einem damit verbundenen ungleichmäßigen Energieeintrag beziehungsweise einer exzentrischen Schmelzgutverteilung ergibt sich eine bessere Verteilung beziehungsweise Zuführung der Energie zum Schmelzgut. Daraus ergeben sich kürzere Prozesszeiten beziehungsweise die Sicherstellung der Chargier- und Vorwärmzeiten bei Schachtöfen.

Das erfindungsgemäße Verfahren lässt sich auch bei einem Gleichstromlichtbogenofen anwenden. Dieser verfügt meist nur über eine, in wenigen Ausnahmefällen über zwei Elektroden. Durch definierte Variation des Effektivwertes bzw. Sollwertes des der Elektrode zugeführten Stromes erreicht man eine vom Zentrum des Ofengefäßes nach außen laufende Welle. Auch hierdurch wird der konvektive Wärmeübergang verbessert.

Das beschriebene Verfahren ist sowohl für herkömmliche Lichtbogenöfen als auch für Schachtöfen anwendbar.

Erfindungsgemäß wird die zweitgenannte Aufgabe gelöst durch einen Lichtbogenofen mit den Merkmalen des Patentanspruches 7. Ein derartiger Lichtbogenofen weist mindestens eine Elektrode zur Erzeugung eines Lichtbogens und eine Steuer-/Regeleinheit auf, in der eine Software zur Durchführung des erfindungsgemäßen Verfahrens implementiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Für eine weitere Beschreibung der Erfindung wird auf die Ausführungsbeispiele der Zeichnungen verwiesen. Es zeigt in einer schematischen Prinzipskizze:

FIG 1    eine schematische Schnittdarstellung eines Lichtbogenofens, und

FIG 2    ein Diagramm mit dem Effektivwert bzw. Sollwert eines einer Elektrode zugeführten Stromes über der Zeit.

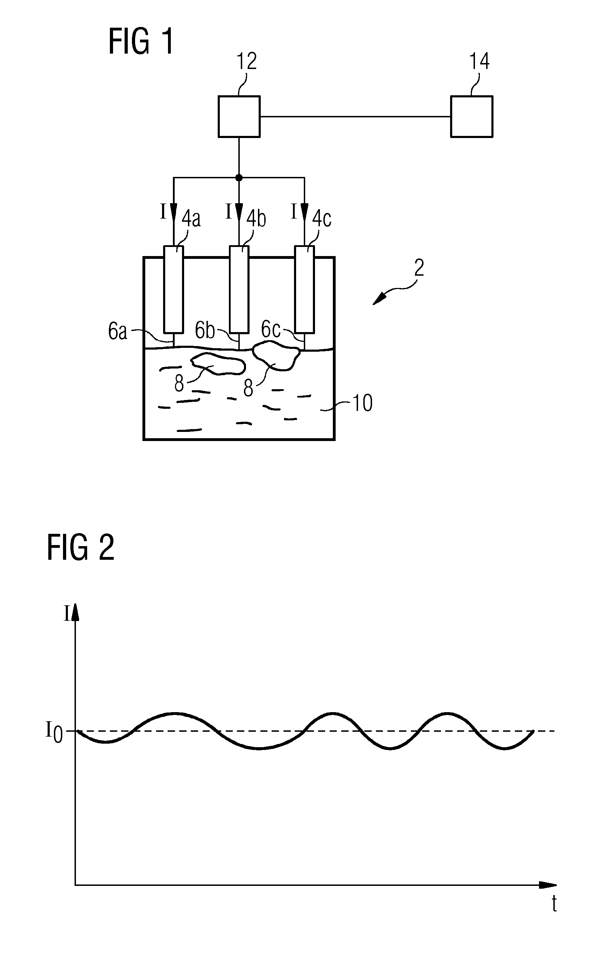

FIG 1 zeigt einen Lichtbogenofen 2 mit in diesem Fall drei Elektroden 4a, 4b, 4c zur Erzeugung eines Lichtbogens 6a, 6b, 6c zum Schmelzen von Schrottteilen 8 aus Stahl. Die drei Elektroden 4a, 4b, 4c sind dabei im Dreieck angeordnet. Während des Betriebs des Lichtbogenofens 2 werden die Schrottteile 8 eingeschmolzen, so dass sich ein Schmelzbad 10 bildet. In diesem Schmelzbad 10 befinden sich nach einer gewissen Betriebsdauer des Lichtbogenofens 2 typischerweise noch zahlreiche größere noch zu schmelzende Schrottstücke 8. Diese werden von den Lichtbögen 6a, 6b, 6c nicht mehr erreicht. Sie können somit im Wesentlichen nur durch Konvektion vom angrenzenden flüssigen Schmelzbad 10 aufgeschmolzen werden. Die einzelnen Elektroden 4a, 4b, 4c sind jeweils an eine Stromquelle 12 angeschlossen, mit deren Hilfe den Elektroden 4a, 4b, 4c ein Strom I zugeführt wird.

Um nun ein weiteres Aufschmelzen der in dem flüssigen Schmelzbad 10 befindlichen Schrottteile 8 zu gewährleisten, wird der den Elektroden 4a, 4b, 4c zugeführte Strom I mittels einer Steuer-/Regeleinheit 14 derart verändert, dass eine Oszillation des Effektivwertes des den Elektroden 4a, 4b, 4c zugeführten Stromes I um einen vorgegebenen Basiswert $I_0$ erfolgt. Dies wird erreicht, indem zunächst die Stromsollwerte bzw. die Impedanzsollwerte der entsprechenden Elektroden 4a, 4b, 4c bzw. Lichtbögen 6a, 6b, 6c variiert werden.

Der zeitliche Verlauf des Effektivwertes des beispielsweise der Elektrode 4a zugeführten Stromes I ist in FIG 2 über der Zeit t dargestellt. Wie zu erkennen ist, oszilliert der Effektivwert des Stromes I periodisch beispielsweise mit einer Frequenz von 1Hz periodisch, in diesem Falle sinusförmig um den vorgegebenen Basiswert $I_0$. Der Effektivwert des Stromes bleibt also nicht konstant, sondern schwankt um den vorgegebenen Basiswert $I_0$. Durch eine derartige Oszillation des Stromes I wird eine Bewegung des Schmelzbades 10 angeregt, so dass die Konvektion verbessert wird. Ein Strom I weist somit folgende Form auf:

$$I = I_0 + \Delta I * \sin(2\pi f t + \varphi).$$

Die Badbewegung kann über die Frequenz f und die Amplitude $\Delta I$ gesteuert werden. In gezeigtem Beispiel beträgt der Phasenwinkel $\varphi = 0°$. Die weiteren Ströme I der Elektroden 4b bzw. 4c sind um 120° versetzt, so dass der Phasenwinkel des Stromes I der Elektrode 4b 120° und des der Elektrode 4c 240° beträgt. Durch diese Phasenverschiebung wird zusätzlich eine Rotation des Schmelzbades 10 erreicht, so dass die Konvektion weiter verbessert wird und somit die Schrotteile 8 in kürzerer Zeit eingeschmolzen werden können.

Das oben beschriebene Verfahren ist technisch einfach zu realisieren, da dieses mit einem herkömmlichen Lichtbogenofen ohne anlagentechnische Modifikation zu realisieren ist. Es müssen lediglich die Sollwerte für den Effektivwert des einer Elektrode zugeführten Stromes nach dem oben beschriebenen Muster programmtechnisch variiert werden. Hierzu ist in der Steuer-/Regeleinheit 14 eine entsprechende Software zur Durchführung des erfindungsgemäßen Verfahrens implementiert. Anhand einer entsprechenden Sollwertvorgabe wird dann der Istwert des Stromes I durch die Steuer-/Regeleinheit 14 auf den vorgegebenen Wert gesteuert/geregelt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zum Betreiben eines Lichtbogenofens (2) mit mindestens einer Elektrode (4a, 4b, 4c) zur Erzeugung eines Lichtbogens (6a, 6b, 6c), bei dem eine Oszillation des Effektivwertes des der Elektrode (4a, 4b, 4c) zugeführten Stromes (I) um einen vorgegebenen Basiswert ($I_0$) erfolgt.

2. Verfahren nach Anspruch 1, bei dem die Oszillation periodisch erfolgt.

3. Verfahren nach Anspruch 2, bei dem die Periodenfrequenz (f) 0,2Hz bis 2Hz beträgt.

4. Verfahren nach einem der vorhergehenden Ansprüche, bei dem die Oszillation des Stromes (I) um den Basiswert ($I_0$) durch Veränderung der Amplitude und/oder der Periodenfrequenz (f) des Stromes (I) erfolgt.

5. Verfahren nach Anspruch 4, bei dem die Periodenfrequenz (f) während eines Zeitabschnitts gesteigert wird.

6. Verfahren nach einem der vorhergehenden Ansprüche, bei dem der Lichtbogenofen (2) drei Elektroden (4a, 4b, 4c) umfasst und die jeweiligen Ströme eine Phasenverschiebung von 120° aufweisen.

7. Lichtbogenofen (2) mit mindestens einer Elektrode (4a, 4b, 4c) zur Erzeugung eines Lichtbogens (6a, 6b, 6c) und einer Steuer-/Regeleinheit (14), in der eine Software zur Durchführung des Verfahrens nach einem der vorstehenden Ansprüche implementiert ist.

FIG 1

FIG 2

Europäisches
Patentamt

European
Patent Office

Office européen
des brevets

**EUROPÄISCHER RECHERCHENBERICHT**

Nummer der Anmeldung

EP 13 17 5076

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 30 35 508 A1 (ROZENBERG VLADIMIR L VOVIC; BRUKOVSKIJ IGOR PAVLOVIC; NECHAMIN SERGEJ) 6. Mai 1982 (1982-05-06)<br>* Abbildungen 5a-5k *<br>* Seite 18, Absatz 3 - Seite 21, Spalte 2 *<br>----- | 1-7 | INV.<br>F27B3/08<br>F27B3/20<br>F27B3/28<br>F27D27/00<br>H05B7/18<br>H05B7/20 |
| X | GB 1 585 195 A (TIBUR METALS LTD) 25. Februar 1981 (1981-02-25)<br>* Abbildungen 4,5 *<br>* Seite 3, Zeile 22 - Zeile 49 *<br>----- | 1-7 | |
| | | | RECHERCHIERTE SACHGEBIETE (IPC)<br><br>F27D<br>F27B<br>C21B<br>C21C<br>H05B |

Der vorliegende Recherchenbericht wurde für alle Patentansprüche erstellt

| Recherchenort | Abschlußdatum der Recherche | Prüfer |
|---|---|---|
| Den Haag | 15. November 2013 | Peis, Stefano |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.............................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 17 5076

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-11-2013

| Im Recherchenbericht angeführtes Patentdokument | Datum der Veröffentlichung | Mitglied(er) der Patentfamilie | Datum der Veröffentlichung |
|---|---|---|---|
| DE 3035508 A1 | 06-05-1982 | KEINE | |
| GB 1585195 A | 25-02-1981 | KEINE | |

Für nähere Einzelheiten zu diesem Anhang : siehe Amtsblatt des Europäischen Patentamts, Nr.12/82